# FASCICULE DE BREVET EUROPEEN

(11) **EP 3 220 001 B1**
(45) Date de publication et mention de la délivrance du brevet: **20.02.2019**
(21) Numéro de dépôt: 17161601.4
(22) Date de dépôt: 17.03.2017
(51) Int. Cl.: F16F 1/387, F16F 1/393, C08C 19/26, C09K 21/06, F16F 1/40, B61F 5/30, B61F 5/50, C09K 21/02, C09K 21/08, C08L 11/00, C08K 3/22

(54) **DISPOSITIF ANTIVIBRATOIRE TENANT AU FEU DESTINE A UNE APPLICATION FERROVIAIRE**
FEUERFESTE SCHWINGUNGSDÄMPFENDE VORRICHTUNG ZUR VERWENDUNG BEI SCHIENENFAHRZEUGEN
FIRE-RESISTANT ANTI-VIBRATION DEVICE INTENDED FOR A RAILWAY APPLICATION

(30) Priorité: 18.03.2016 FR 1652335
(43) Date de publication de la demande: 20.09.2017
(73) Titulaire: HUTCHINSON, 75008 Paris (FR)
(72) Inventeur: FROMONT, Yann, 95300 PONTOISE (FR); ADDES, Nordine, 76520 LES AUTHIEUX (FR); AVOINET, Stéphane, 77720 Champeaux (FR); GAUTHERET, Pierre-Emmanuel, 76240 LE MESNIL ESNARD (FR)
(74) Mandataire: Gevers & Orès

(56) Documents cités:
- EP-A1- 2 196 492
- DE-A1-102013 017 571
- US-A1- 2008 090 057

## Description

L'invention concerne un dispositif antivibratoire tenant au feu, destiné à une application ferroviaire.

L'application ferroviaire concerne notamment les trains, tramways ou métros.

Le document EP 2 196 492 propose un dispositif antivibratoire tenant au feu, notamment destiné à une application ferroviaire, comportant deux armatures, une structure d'amortissement située entre les deux armatures et une couche barrière au feu recouvrant au moins partiellement la structure d'amortissement. La structure d'amortissement est réalisée en élastomère. La couche barrière au feu comporte un agent de liaison, par exemple un élastomère, et un agent ignifugeant.

Les normes applicables en termes de tenue au feu sont de plus en plus exigeantes, en particulier dans le domaine ferroviaire. Ainsi, dans le domaine ferroviaire, la norme EN 45545-2 (2013) fait désormais référence.

Un objectif de l'invention est de proposer un dispositif antivibratoire présentant une tenue au feu améliorée, notamment apte à répondre à la norme précitée.

A cet effet, l'invention propose un dispositif antivibratoire destiné à une application ferroviaire, comprenant :
- une première armature,
- une deuxième armature,
- une structure d'amortissement des vibrations située entre les deux armatures, et
- au moins une couche barrière au feu recouvrant au moins partiellement la structure d'amortissement ;
caractérisé en ce que ladite au moins une couche barrière au feu est un élastomère à base de polychloroprène comportant au moins un agent ignifugeant choisi parmi l'alumine trihydratée ou l'hydroxyde de magnésium.

Le dispositif pourra également présenter l'une au moins des caractéristiques suivantes, prise seule ou en combinaison :
- la base de polychloroprène représente entre 80 parts et 100 parts de l'élastomère formant cette couche barrière eu feu, pour 100 parts de l'élastomère formant cette couche barrière au feu et, l'alumine trihydratée ou l'hydroxyde de magnésium représente entre 10 et 300 parts ;
- la couche barrière au feu comporte un agent de vulcanisation choisi parmi : oxyde de zinc (ZnO), diarylparaphénylènediamine, oxyde de magnésium (MgO) ou réalisé à partir d'un mélange de ceux-ci ;
- la couche barrière au feu comprend un agent d'adhésion entre la couche barrière au feu et la structure d'amortissement à savoir le Triallylisocyanurate et/ou le péroxyde de dicumyle ;
- le ou chaque agent d'adhésion représente au plus 20 parts ;
- la couche barrière au feu comporte au moins un agent de mise en oeuvre, par exemple du Bis(Pentabromophényl)éthane, de l'acide stéarique, de la paraffine chlorée ou un mélange de ceux-ci ;
- la couche barrière au feu comporte au moins un agent de renforcement mécanique, par exemple du noir de carbone et/ou du trioxyde d'antimoine ;
- la couche barrière au feu présente une épaisseur d'au moins 0,5mm ;
- la couche barrière au feu comprend au moins un autre élastomère, par exemple un élastomère permettant d'améliorer la mise en oeuvre, les propriétés mécaniques ou l'imperméabilité aux gaz du polychloroprène ;
- la première armature forme une armature interne, la deuxième armature forme une armature externe et, la structure d'amortissement des vibrations se présente sous la forme d'un lamifié couche d'élastomère/couche d'un matériau non élastomère plus rigide que l'élastomère, par exemple du métal, et comportant une première face fixée à l'armature interne, une deuxième face fixée à l'armature externe, une troisième face s'étendant entre l'armature interne et l'armature externe et une quatrième face, opposée à la troisième face et s'étendant également entre l'armature interne et l'armature externe, lesdites troisième et quatrième faces étant donc des faces non fixées aux armatures interne et externe, la couche barrière au feu étant par ailleurs située sur l'une au moins des faces non liées aux armatures interne et externe.

L'invention sera mieux comprise et d'autres buts, avantages et caractéristiques de celle-ci apparaîtront plus clairement à la lecture de la description qui suit et qui est faite au regard des figures annexées suivantes :
- La figure 1 représente, selon une vue en coupe, un exemple de dispositif antivibratoire selon l'invention ;
- La figure 2 représente, selon une vue en perspective, le dispositif antivibratoire de la figure 1.

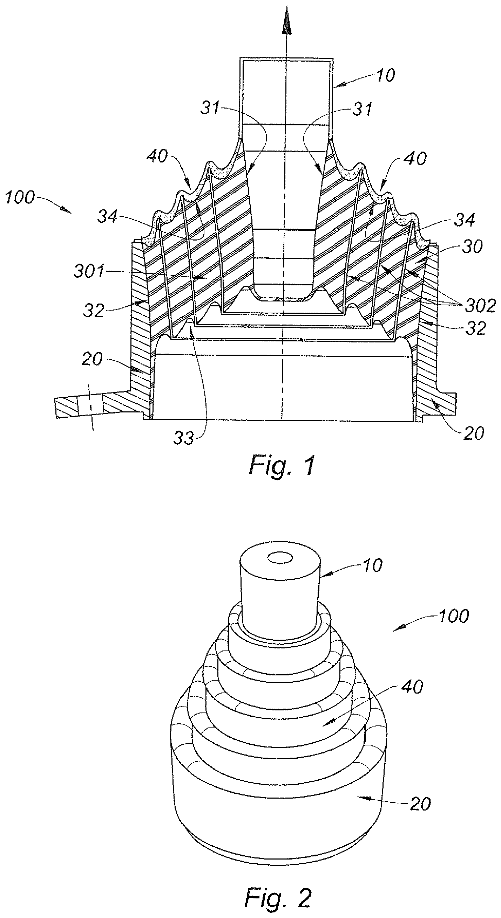

La description qui suit est fait en référence aux figures 1 et 2 annexées, lesquelles représentent un dispositif antivibratoire utilisé pour une application ferroviaire. En l'occurrence, il s'agit d'une suspension primaire destinée à être installée sur un bogie de train.

Pour autant, il convient de noter que la description qui suit pourrait tout aussi bien concerner, pour cette application ferroviaire, une suspension secondaire telle que celle qui est représentée dans le document EP 2 196 492, une articulation élastique, notamment de type pivot, tige élastique ou palier lisse (« bush » ou « bush bearing » selon la terminologie anglo-saxonne) ou une roue élastique (tramway, métro).

Le dispositif antivibratoire 100 selon l'invention comprend une première armature 10, une deuxième armature 20 et une structure 30 d'amortissement des vibrations située entre les deux armatures 10, 20.

Dans le cas d'espèce, la première armature 10 forme une armature interne et la deuxième armature 20 forme une armature externe et la structure 30 d'amortissement des vibrations se présente sous la forme d'un lamifié couche d'élastomère 301/couche d'un matériau non élastomère plus rigide 302 (en l'occurrence du métal) que l'élastomère s'étendant entre les deux armatures 10, 20. Plus précisément, dans le cas d'espèce, la structure 30 d'amortissement des vibrations comporte une première face 31 fixée à l'armature interne 10, une deuxième face 32 fixée à l'armature externe 20, une troisième face 33 s'étendant entre l'armature interne 10 et l'armature externe 20 et une quatrième face 34, opposée à la troisième face 33 et s'étendant également entre l'armature interne 10 et l'armature externe 20. On comprend que les faces 33, 34 ne sont fixées à aucune des armatures interne ou externe.

Le dispositif antivibratoire 100 comprend également au moins une couche barrière au feu 40 recouvrant au moins partiellement la structure d'amortissement 30. Dans le cas d'espèce, la couche barrière au feu 40 recouvre la quatrième face 34 de la structure 30 d'amortissement des vibrations, qui est la surface destinée à être la plus exposée, en utilisation, un éventuel problème

La couche barrière au feu 40 est un élastomère à base de polychloroprène comportant au moins un agent ignifugeant, en l'occurrence l'alumine trihydratée.

L'épaisseur de la couche barrière au feu 40 sera avantageusement d'au moins 0,5mm, et typiquement d'environ 2mm. Avantageusement, cette épaisseur sera néanmoins comprise entre 0,5mm et quelques mm, notamment entre 0,5mm et 10mm ou entre 0,5mm et 5mm. Plus généralement, cette épaisseur pourra être comprise entre 0,5mm et plusieurs centimètres et notamment entre 0,5mm et 3cm. Une valeur minimum de 0,5mm est en effet avantageuse pour maintenir un minimum de tenue mécanique de la couche barrière 40 au feu, notamment pendant la fabrication du dispositif. Par ailleurs, il n'est pas aisé d'assurer, lors de cette fabrication, un calandrage adéquat d'une couche barrière au feu faisant moins de 0,5mm. La couche barrière 40 au feu n'intervient pas dans la fonction d'amortissement et donc antivibratoire du dispositif antivibratoire qui est assurée par la structure d'amortissement 30.

Le tableau 1 représente un exemple de composition chimique de la couche barrière au feu 40 susceptible d'être employée avec le dispositif antivibratoire 100 des figures 1 et 2.

**Tableau 1**

| Catégorie | Nature chimique | Fonction | Quantité (pce) |
|---|---|---|---|
| Elastomère | Polychloroprène | Tenue mécanique et au feu | 100 |
| Plastifiant | Bis(Pentabromophényl) éthane | Mise en oeuvre | 4 |
| | Acide stéarique | Mise en oeuvre | 1 |
| | Paraffine chlorée | Mise en oeuvre | 14 |
| Charge | Alumine trihydratée (surface spécifique 15m²/g) | Ignifugation | 70 |
| | Noir de carbone | Renfort mécanique | 18 |
| | Trioxyde d'antimoine | Renfort mécanique | 8 |
| Agent de vulcanisation | Oxyde de zinc | Vulcanisation | 5 |
| | Diarylparaphénylenediamine | Vulcanisation | 1,5 |
| | Oxyde de magnésium | Vulcanisation | 4 |
| Agent d'adhésion | Triallylisocyanurate (TAIC) | Adhésion | 2 |
| | Péroxyde de dicumyl | Adhésion | 5 |

Le Dupont™ Neopren GW est un exemple de polychloroprène susceptible d'être utilisé.

L'Apyral® 200SM est un exemple d'alumine trihydratée avec une surface spécifique de 15m²/g susceptible d'être utilisée. En effet, l'alumine trihydratée se présente, avant fabrication de la couche barrière au feu, sous forme de poudre, Il convient de noter qu'il existe plusieurs grades d'alumine trihydratée, ces grades se différenciant les uns des autres par leurs surfaces spécifiques. Plus la surface spécifique est élevée et plus l'effet d'ignifugation est important.

Dans le tableau 1, les quantités de chaque produit sont fournies en pce, à savoir en parts. Comme dans toute formulation d'élastomère, on définit tout d'abord 100 parts d'élastomère, en l'occurrence, dans ce tableau 1, 100 parts de polychloroprène. Puis, on définit les autres parts en fonction de ces 100 parts d'élastomère.

Les produits essentiels pour atteindre l'objectif de l'invention sont le polychloroprène (élastomère) et l'alumine trihydratée (Al₂O₃ - 3H₂O), ce dernier étant un agent ignifugeant.

Ainsi, outre la composition spécifique fournie dans le tableau 1, on pourra donc prévoir une couche barrière au feu 40 ne comportant que du polychloroprène et de l'alumine trihydratée (ATH). Dans ce cas, on prévoira, pour 100 parts (pce) de polychloroprène, entre 10 et 300 parts (pce) d'alumine trihydratée.

Si l'on prévoit une épaisseur de 0,5mm pour la couche barrière au feu 40, alors il convient avantageusement de prévoir, pour 100 parts de polychloroprène, au moins 200 parts d'alumine trihydratée. Cela permet d'assurer la tenue au feu, notamment selon la norme précitée.

Lorsque l'épaisseur de la couche barrière 40 au feu augmente, on peut envisager de prévoir, pour 100 parts de polychloroprène, moins de 200 parts (mais toujours plus de 10) d'alumine trihydratée pour assurer la tenue au feu, notamment selon la norme précitée. Par exemple, pour une épaisseur de la couche barrière 40 au feu de 1,5mm, il convient avantageusement de prévoir, pour 100 parts de polychloroprène, au moins 70 parts d'alumine trihydratée, Selon un autre exemple, pour une épaisseur de la couche barrière 40 au feu de 10mm, il convient avantageusement de prévoir, toujours pour 100 parts de polychloroprène, au moins 20 parts d'alumine trihydratée. Enfin, selon encore un autre exemple, pour une épaisseur de 2cm voire plus de la couche barrière 40 au feu, on peut envisager, pour 100 parts de polychloroprène, 10 parts d'alumine trihydratée,

Il convient de noter que l'alumine trihydratée peut être remplacée par de l'hydroxyde de magnésium en tant qu'agent ignifugeant. Dans ce cas, la composition chimique de base de la couche barrière au feu 40 prévoit du polychloroprène et de l'hydroxyde de magnésium, selon des proportions (pce) identiques que celles du polychloroprène et de l'alumine trihydratée. Ainsi, on prévoira, pour 100 parts (pce) de polychloroprène, entre 10 et 300 parts (pce) d'hydroxyde de magnésium. Là également, en fonction de l'épaisseur de la couche barrière 40 au feu augmente, la part minimum d'hydroxyde de magnésium, pour 100 parts (pce) de polychloroprène) est ajustable comme décrit précédemment pour l'alumine trihydratée, qualitativement et quantitativement.

La composition de la couche barrière au feu 40 fournie au tableau 1 a été testée conformément à la norme EN 45545-2, applicable au domaine ferroviaire.

Cette norme propose différents tests à passer, les tests concernés étant dépendants notamment de la nature du dispositif antivibratoire (par exemple élastomère/métal ou non, masse d'élastomère) et de l'environnement d'utilisation (par exemple, selon que le train est un train couchette, un métro, etc...).

Le dispositif antivibratoire 100 représenté sur les figures 1 et 2 est en l'occurrence une pièce élastomère/métal. Dans ce cas, la norme indique qu'il convient de se référer aux critères R9, R22, R23 et/ou R24. Chaque critère propose une série de tests, chaque test devant être réalisé selon une norme ISO.

Parmi ces différents critères, le plus difficile à atteindre est le critère R9, lequel comporte deux tests à réaliser, le premier selon la norme ISO 5660-1 (allumabilité et débit calorifique avec détermination du MAHRE à 25 kW/m²), le deuxième selon la norme ISO 5659-2 (opacité des fumées avec détermination de Ds(max) à 25kW/m² avec flamme pilote plus, en même temps, la toxicité des fumées à 25 kW/m² avec flamme pilote et détermination du CIT_{G} à 4mn et 8mn).

Par ailleurs, la prise en compte de l'environnement d'utilisation du dispositif antivibratoire est établi pour chaque critère et chaque test ISO concerné par ce critère, sur la base de valeurs limites plus ou moins difficiles à atteindre, selon une classification HL1 (la moins contraignante) à HL3 (la plus contraignante : notamment train couchette ou métro, lequel évolue en tunnel).

C'est pourquoi la composition du tableau 1 a été testée selon le critère R9 de la norme EN 45545-2, critère qui est le plus difficile à atteindre pour un dispositif antivibratoire tel que celui qui est représenté sur les figures 1 et 2.

Pour respecter la norme selon ce critère R9, il convient d'effectuer les différents tests sur une plaque en élastomère d'épaisseur de 20mm, faisant 100mm*100m (Test 1 du tableau 2) ou 75mm*75mm (test 2 du tableau 2) dans les autres dimensions, et dont la composition est celle qui est destinée à former la structure d'amortissement 30 des vibrations. Un bardage est ajoutée en surface de la plaque, ce bardage étant destiné à représenter la couche barrière au feu 40.

Pour plus de précisions sur la mise en oeuvre des différents tests, on pourra se référer à la norme EN 45545-2.

Le tableau 2 ci-dessous fournit, pour les différents tests du critère R9, les résultats obtenus pour une « référence I » (plaque en caoutchouc naturel d'épaisseur 20mm, sans bardage anti-feu), une « référence II » (plaque en caoutchouc naturel d'épaisseur 18mm, avec bardage dont la composition est celle du tableau 1 mais sans alumine trihydratée, en épaisseur 2mm) et les résultats obtenus pour l'« invention » (plaque en caoutchouc naturel d'épaisseur de 18mm avec bardage dont la composition est celle du tableau 1, en épaisseur 2mm).

Pour la « référence I », la « référence II » et pour l'« invention », les plaques présentent des dimensions identiques dans les directions autres que celles de l'épaisseur. Le tableau 2 rappelle également ce qu'il convient d'atteindre selon le critère R9 (le plus difficile à atteindre parmi les critères R9, R22, R23 et R24), sous-critère HL2 (contrainte moyenne parmi les sous-critères HL1, HL2 et HL3, mais qui couvre généralement plus de 90% du marché).

**Tableau 2 - critère R9, HL2 de la norme EN45545-2**

| | Test 1 : ISO 5660-1 | Test 2 : ISO 5659-2 | |
|---|---|---|---|
| | MAHRE (kW/m²) | Dₛ(max) | ITCG (toxicité) |
| critère R9, HL2 | < 90 | < 600 | < 1,8 |
| Référence I | 160 | 792 | 0,14 |
| Référence II | 85 | 792 | 0,5 |
| Invention | 79,4 | 95,8 | 0,53 |

Comme on peut le constater dans le tableau 2, ni la référence I, ni la référence II ne sont conformes à la norme. En comparant la référence II à la référence I, on note que le MAHRE est nettement amélioré, comme la toxicité. Ceci est lié à la présence du polychloroprène. Toutefois, la référence II ne permet pas d'atteindre le critère Dₛ(max).

Au contraire, l'invention passe bien la norme selon le critère R9, sous-critère HL2. Par ailleurs, en comparant, l'invention à la référence II, on note que la présence d'alumine trihydratée, en plus du polychloroprène, améliore nettement le Dₛ(max) et améliore également le MAHRE. L'amélioration du Dₛ(max) peut être attribuée à la présence d'alumine trihydratée. En ce qui concerne le MAHRE, on relève un effet de synergie entre le polychloroprène et l'alumine trihydratée.

Il convient de noter que si l'on souhaite atteindre le sous-critère HL3, on peut par augmenter l'épaisseur de bardage, qui est représentatif, selon la norme, de l'épaisseur de la couche barrière au feu 40, au-delà de 2mm en conservant la composition du tableau 1. On peut aussi, en variante, conserver cette épaisseur de 2mm et augmenter les parts d'alumine trihydratée. On peut encore, selon une autre variante, augmenter à la fois l'épaisseur du bardage et les parts d'alumine trihydratée. Avantageusement, on mettra cependant à profit les effets de synergie entre le polychloroprène et l'alumine trihydratée, notamment sur le MAHRE, en augmentant les parts d'alumine trihydratée sans modifier l'épaisseur de bardage, voir en la réduisant. Cela permet de définir une couche barrière 40 au feu répondant aux requis et qui n'est par ailleurs pas trop encombrante.

En ce qui concerne la composition chimique de la couche barrière au feu 40, on pourra plus généralement prévoir, comme indiqué dans le tableau 3, les parts (pce) suivantes :

**Tableau 3**

| Catégorie | Nature chimique | Quantité (pce) |
|---|---|---|
| Elastomère | Polych loroprène | 80 à 100 |
| | Autre élastomère | 0 à 20 |
| Plastifiant | Bis(Pentabromophényl) éthane | 0 à 50 |
| | Acide stéarique | 0 à 5 |
| | Paraffine chlorée | 0 à 50 |
| Charge | Alumine trihydratée | 10 à 300 |
| | Noir de carbone | 0 à 200 |
| | Trioxyde d'antimoine | 0 à 50 |
| Agent de vulcanisation | Oxyde de zinc | 0 à 50 |
| | Diarylparaphénylènediamine | 0 à 10 |
| | Oxyde de magnésium | 0 à 50 |
| Agent d'adhésion | Triallytisocyanurate (TAlC) | 0 à 20 |
| | Péroxyde de dicumyl | 0 à 20 |

Pour rappel, la composition de l'élastomère formant la couche barrière 40 au feu est toujours définie à 100 parts. La base de cet élastomère formant la couche barrière 40 au feu est le polychloroprène (CR), avec au moins 80 parts (i.e. entre 80 et 100 parts de l'élastomère formant la couche barrière 40 au feu), et, comme le montre le tableau 3, un autre élastomère permettant de réaliser le complément pour arriver au total de 100 parts, peut être envisagé pour accomplir certaines fonctions.

Par exemple, cet autre élastomère peut être un agent de mise en oeuvre additionnel (facilite le mélange des différents composants lors de la fabrication de la couche barrière 40 au feu) représentant au plus 20 parts (en conséquence le polychloroprène représente alors au moins 80 parts).

Selon un autre exemple, cet autre élastomère peut améliorer les propriétés mécaniques de la couche barrière 40 au feu. Dans ce cas, on peut notamment envisager du caoutchouc naturel (NR) représentant au plus 5 parts (en conséquence le polychloroprène représente alors au moins 95 parts).

Selon un dernier exemple, cet autre élastomère peut permettre d'améliorer l'imperméabilité aux gaz du polychloroprène. Dans ce cas, on peut notamment envisager un butyle (connu sous l'acronyme IIR, signifiant « Isobutylene Isoprene Rubber » selon la terminologie anglo-saxonne), représentant au plus 10 parts ou au plus 5 parts.

Les parts maximales de cet autre élastomère et ce, quel que soit sa fonction, sont déterminées, pour les exemples donnés, pour que l'élastomère à base de polychloroprène maintienne ses propriétés de tenue au feu, notamment au regard de la norme précitée.

Bien entendu, on peut envisager plusieurs autres élastomères, en plus de la base en polychloroprène, par exemple un mélange des autres élastomères précités.

Il convient de noter que l'alumine trihydratée employée dans la couche barrière au feu 40 présentera avantageusement une surface spécifique (m²/g) d'au moins 15 m²/g (poudre). C'est le cas du produit connu sous le nom commercial de l'Apyral® 200 SM. Néanmoins, on peut envisager l'emploi d'une alumine trihydratée avec une surface spécifique d'au moins 10m²/g (par exemple de l'Apyral® 120E, qui présente une surface spécifique de 11m²/g), voire d'au moins 5m²/g (par exemple de l'Apyral® 60D qui présente une surface spécifique de 6m²/g).Quelle que soit le grade considéré, on pourra, pour 100 parts d'élastomère, toujours prévoir entre 10 parts et 300 parts d'alumine trihydratée. Cependant, pour un grade dont la surface spécifique est moindre, il convient de prévoir plus de parts d'alumine trihydratée. A titre d'exemple, si pour 100 parts d'élastomère on prévoit 95 parts d'Apyral® 200SM, un équivalent en termes de résultats attendus correspond, toujours pour 100 parts d'élastomère, à 120 parts d'Apyral® 60D.

Comme le montre le tableau 3, la couche barrière au feu 40 pourra comporter au moins un agent de vulcanisation choisi parmi : oxyde de zinc (ZnO), diarylparaphénylènediamine, oxyde de magnésium ou réalisé à partir d'un mélange de ceux-ci. D'ailleurs dans le cas testé du tableau 1, la couche barrière au feu 40 comporte un mélange de l'ensemble de ces composés chimiques. Cela permet d'assurer, lors de la fabrication, la vulcanisation de la couche barrière 40 au feu.

En outre, toujours à l'appui de la figure 3, on relève que la couche barrière au feu 40 pourra comprendre au moins un agent d'adhésion entre le polychloroprène (couche barrière 40 au feu) et le caoutchouc naturel (structure d'amortissement 30), à savoir le Triallylisocyanurate (TAlC) et/ou le péroxyde de dicumyle.

Ce ou chacun de ces agents d'adhésion peut par ailleurs assurer une adhésion avec d'autres types d'élastomère que le caoutchouc naturel. Ainsi, on peut tout à fait envisager, à titres d'exemples non limitatifs, du butadiène (BR), du Nitride Butadiène (NBR) ou du Styrène Butadiène (SBR). Cette adhésion, qui est alors une adhésion chimique entre la couche barrière 40 au feu et la structure d'amortissement 30 est avantageuse car elle permet de s'assurer que la couche barrière recouvre, en toutes conditions d'utilisation, la structure d'amortissement 30.

Néanmoins, en l'absence d'agent d'adhésion dans la couche barrière 40 au feu, on peut prévoir d'autres moyens telle qu'une colle adaptée entre la couche barrière 40 au feu et la structure d'amortissement 30.

Dans certains cas, en particulier lorsque le dispositif antivibratoire présente une certaine symétrie (c'est le cas sur les figures 1 et 2) et toujours en l'absence d'un tel agent d'adhésion, on peut se contenter des propriétés élastiques de la couche barrière 40 au feu, propriétés permettant de maintenir suffisamment cette couche barrière 40 au feu contre la structure d'amortissement 30 (la couche barrière 40 au feu se présente alors sous la forme d'une « chaussette » recouvrant la circonférence de la structure d'amortissement 30).

De même, la couche barrière au feu 40 pourra comporter au moins un agent de mise en oeuvre, à savoir du Bis(Pentabromophényl) éthane, de l'acide stéarique et/ou de la paraffine chlorée. Un agent de mise en oeuvre facilite le mélange entre les différents composants lors de la fabrication de l'élastomère destiné à former la couche barrière 40 au feu.

Enfin, et ce de manière classique, la couche barrière au feu 40 pourra comporter un agent de renforcement mécanique, à savoir du noir de carbone et/ou du trioxyde d'antimoine.

Le dispositif antivibratoire 100 conformément à l'invention du tableau 1 et tel que représenté sur les figures 1 et 2, peut être fabriqué de la façon suivante.

Tout d'abord, on calandre une plaque de 2mm d'épaisseur, avec la composition chimique définie au tableau 1.

Puis, on découpe cette plaque sous la forme d'une portion d'anneau (cette forme est choisie car elle permet d'obtenir un cône une fois mise en forme en trois dimensions).

On place ensuite cette plaque avec deux armatures et un ensemble de pièces métalliques (destinées à former les couches rigides du lamifié élastomère/métal de la structure d'amortissement 30) dans un moule. Il convient de noter que le moule est en soi tout à fait classique et est donc un moule typiquement utilisé pour former un dispositif antivibratoire ne présentant pas de couche barrière au feu.

On injecte alors du caoutchouc naturel dans le moule (ce caoutchouc étant destiné à former l'élastomère du lamifié élastomère/métal de la structure d'amortissement 30).

On réalise la vulcanisation, par exemple à 160°C pendant 15 mn. Lors de cette étape de vulcanisation, l'élastomère de la couche barrière au feu 40 se lie intimement à l'élastomère (ici, caoutchouc naturel) de la structure d'amortissement 30.

On obtient alors une couche barrière au feu 40 parfaitement intégrée au dispositif antivibratoire 100, avec des risques de délamination avec l'élastomère de la structure d'amortissement très limités, pour ne pas dire nuls.

Bien entendu, on comprend que ce procédé de fabrication, décrit pour le cas particulier de la couche barrière au feu dont la composition chimique est fournie au tableau 1 pour obtenir un dispositif antivibratoire 100 tel que représenté sur les figures 1 et 2 est généralisable à d'autres dispositifs antivibratoires, comportant notamment une couche barrière au feu telle que définie au tableau 3 ou dans laquelle l'alumine trihydratée est remplacée par de l'hydroxyde de magnésium et/ou ne formant pas une suspension primaire.

Par ailleurs, avant de réaliser le calandrage de la couche barrière au feu, on comprend qu'il convient de formuler chimiquement cette couche. Cette opération est classique et n'est donc pas plus détaillée. C'est cependant à ce stade qu'il convient de choisir le grade (surface spécifique) de la poudre d'alumine trihydratée à employer. Une remarque similaire peut être effectuée lorsque des grades différents d'hydroxyde de magnésium sont disponibles.

## Revendications

1. Dispositif antivibratoire (100) destiné à une application ferroviaire, comprenant :
- une première armature (10),
- une deuxième armature (20),
- une structure (30) d'amortissement des vibrations située entre les deux armatures (10, 20), et
- au moins une couche barrière au feu (40) recouvrant au moins partiellement la structure d'amortissement (30);
**caractérisé en ce que** ladite au moins une couche barrière au feu (40) est un élastomère à base de polychloroprène comportant au moins un agent ignifugeant choisi parmi l'alumine trihydratée ou l'hydroxyde de magnésium.

2. Dispositif antivibratoire (100) selon la revendication 1, dans lequel la couche barrière au feu (40) est telle que :
- la base de polychloroprène représente entre 80 parts et 100 parts de l'élastomère formant cette couche barrière eu feu, pour 100 parts de l'élastomère formant cette couche barrière au feu ; et
- l'alumine trihydratée ou l'hydroxyde de magnésium représente entre 10 et 300 parts.

3. Dispositif antivibratoire (100) selon l'une des revendications précédentes, dans lequel la couche barrière au feu (40) comporte un agent de vulcanisation choisi parmi : oxyde de zinc (ZnO), diarylparaphénylènediamine, oxyde de magnésium (MgO) ou réalisé à partir d'un mélange de ceux-ci.

4. Dispositif antivibratoire (100) selon l'une des revendications précédentes, dans lequel la couche barrière au feu (40) comprend un agent d'adhésion entre la couche barrière (40) au feu et la structure d'amortissement (30) à savoir le Triallylisocyanurate et/ou le péroxyde de dicumyle.

5. Dispositif antivibratoire (100) selon la revendication précédente, dans lequel le ou chaque agent d'adhésion représente au plus 20 parts.

6. Dispositif antivibratoire (100) selon l'une des revendications précédentes, dans lequel la couche barrière au feu (40) comporte au moins un agent de mise en oeuvre, par exemple du Bis(Pentabromophényl)éthane, de l'acide stéarique, de la paraffine chlorée ou un mélange de ceux-ci.

7. Dispositif antivibratoire (100) selon l'une des revendications précédentes, dans lequel la couche barrière au feu (40) comporte au moins un agent de renforcement mécanique, par exemple du noir de carbone et/ou du trioxyde d'antimoine.

8. Dispositif antivibratoire (100) selon l'une des revendications précédentes, dans lequel la couche barrière au feu (40) présente une épaisseur d'au moins 0,5mm.

9. Dispositif antivibratoire (100) selon l'une des revendications précédentes, dans lequel la couche barrière au feu (40) comprend au moins un autre élastomère, par exemple un élastomère permettant d'améliorer la mise en oeuvre, les propriétés mécaniques ou l'imperméabilité aux gaz du polychloroprène.

10. Dispositif antivibratoire (100) selon l'une des revendications précédentes, dans lequel :
- la première armature (10) forme une armature interne ;
- la deuxième armature (20) forme une armature externe ; et
- la structure (30) d'amortissement des vibrations se présente sous la forme d'un lamifié couche d'élastomère (301)/couche d'un matériau non élastomère (302) plus rigide que l'élastomère, par exemple du métal, et comportant une première face (31) fixée à l'armature interne (10), une deuxième face (32) fixée à l'armature externe (20), une troisième face (33) s'étendant entre l'armature interne (10) et l'armature externe (20) et une quatrième face (34), opposée à la troisième face (33) et s'étendant également entre l'armature interne (10) et l'armature externe (20), lesdites troisième et quatrième faces (33, 34) étant donc des faces non fixées aux armatures interne et externe ;
la couche barrière au feu (40) étant par ailleurs située sur l'une (34) au moins des faces (33, 34) non liées aux armatures interne (10) et externe (20).

## Patentansprüche

1. Schwingungsdämpfende Vorrichtung (100) zur Verwendung bei Schienenfahrzeugen, umfassend:
- eine erste Armatur (10),
- eine zweite Armatur (20),
- eine Schwingungsdämpfungsstruktur (30), die zwischen den zwei Armaturen (10, 20) positioniert ist, und
- mindestens eine Feuersperrschicht (40), die mindestens teilweise die Dämpfungsstruktur (30) abdeckt;
**dadurch gekennzeichnet, dass** die mindestens eine Feuersperrschicht (40) ein Elastomer auf Basis von Polychloropren ist, das mindestens ein feuerbeständiges Mittel, ausgewählt aus dem Aluminiumoxid-Trihydrat oder dem Magnesiumhydroxid, enthält.

2. Schwingungsdämpfende Vorrichtung (100) nach Anspruch 1, wobei die Feuersperrschicht (40) derart ist, dass:
- die Polychloroprenbasis zwischen 80 Teile und 100 Teile des Elastomers, das diese Feuersperrschicht bildet, darstellt, für 100 Teile des Elastomers, das diese Feuersperrschicht bildet; und
- das Aluminiumoxid-Trihydrat oder das Magnesiumhydroxid zwischen 10 und 300 Teile darstellt.

3. Schwingungsdämpfende Vorrichtung (100) nach einem der vorstehenden Ansprüche, wobei die Feuersperrschicht (40) ein Vulkanisierungsmittel enthält, ausgewählt aus: Zinkoxid (ZnO), Diarylparaphenylendiamin, Magnesiumoxid (MgO) oder umgesetzt aus einem Gemisch davon.

4. Schwingungsdämpfende Vorrichtung (100) nach einem der vorstehenden Ansprüche, wobei die Feuersperrschicht (40) ein Haftmittel zwischen der Feuersperrschicht (40) und der Dämpfungsstruktur (30) umfasst, und zwar das Triallylisocyanurat und/oder das Dicumylperoxid.

5. Schwingungsdämpfende Vorrichtung (100) nach dem vorstehenden Anspruch, wobei das oder jedes Haftmittel höchstens 20 Teile darstellt.

6. Schwingungsdämpfende Vorrichtung (100) nach einem der vorstehenden Ansprüche, wobei die Feuersperrschicht (40) mindestens ein Einsatzmittel enthält, beispielsweise Bis(Pentabromophenyl)ethan, Stearinsäure, chloriertes Paraffin oder ein Gemisch davon.

7. Schwingungsdämpfende Vorrichtung (100) nach einem der vorstehenden Ansprüche, wobei die Feuersperrschicht (40) mindestens ein mechanisches Verstärkungsmittel enthält, beispielsweise Ruß und/oder Antimontrioxid.

8. Schwingungsdämpfende Vorrichtung (100) nach einem der vorstehenden Ansprüche, wobei die Feuersperrschicht (40) eine Dicke von mindestens 0,5 mm aufweist.

9. Schwingungsdämpfende Vorrichtung (100) nach einem der vorstehenden Ansprüche, wobei die Feuersperrschicht (40) mindestens ein anderes Elastomer umfasst, beispielsweise ein Elastomer, das eine Verbesserung des Einsatzes, der mechanischen Merkmale oder der Undurchlässigkeit für Polychloroprendämpfe ermöglicht.

10. Schwingungsdämpfende Vorrichtung (100) nach einem der vorstehenden Ansprüche, wobei:
- die erste Armatur (10) eine interne Armatur bildet;
- die zweite Armatur (20) eine externe Armatur bildet; und
- die Schwingungsdämpfungsstruktur (30) die Form eines Laminats Elastomerschicht (301)/Schicht aus einem nichtelastomeren Material (302), das starrer als das Elastomer ist, beispielsweise Metall, aufweist, und eine erste Fläche (31), die an der internen Armatur (10) befestigt ist, eine zweite Fläche (32), die an der externen Armatur (20) befestigt ist, eine dritte Fläche (33), die sich zwischen der internen Armatur (10) und der externen Armatur (20) erstreckt, und eine vierte Fläche (34) enthält, die der dritten Fläche (33) gegenüberliegt und sich ebenfalls zwischen der internen Armatur (10) und der externen Armatur (20) erstreckt, wobei die dritte und vierte Fläche (33, 34) folglich Flächen sind, die nicht an der internen und externen Armatur befestigt sind;
die Feuersperrschicht (40) außerdem auf mindestens einer (34) der Flächen (33, 34), die nicht mit der internen (10) und externen (20) Armatur verbunden sind, positioniert ist.

## Claims

1. Anti-vibration device (100) intended for a railway application, comprising:
- a first armature (10),
- a second armature (20),
- a structure (30) for damping vibrations located between the two armatures (10, 20), and
- at least one fire barrier layer (40) covering at least partially the damping structure (30);
**characterised in that** said at least one fire barrier layer (40) is an elastomer with a polychloroprene base comprising at least one flame retardant selected from alumina trihydrate or magnesium hydroxide.

2. Anti-vibration device (100) according to claim 1, wherein the fire barrier layer (40) is such that:
- the polychloroprene base represents between 80 units and 100 units of the elastomer forming this fire barrier layer, for 100 units of the elastomer forming this fire barrier layer; and
- the alumina trihydrate or magnesium hydroxide represents between 10 and 300 units.

3. Anti-vibration device (100) according to one of the preceding claims, wherein the fire barrier layer (40) comprises a vulcanising agent selected from: zinc oxide (ZnO), diarylparaphenylenediamine, magnesium oxide (MgO) or a mixture thereof.

4. Anti-vibration device (100) according to one of the preceding claims, wherein the fire barrier layer (40) comprises a bonding agent between the fire barrier layer (40) and the damping structure (30), namely triallyl isocyanurate and/or dicumyl peroxide.

5. Anti-vibration device (100) according to the preceding claim, wherein the or each bonding agent represents 20 units at the most.

6. Anti-vibration device (100) according to one of the preceding claims, wherein the fire barrier layer (40) comprises at least one processing agent, for example Bis(pentabromophenyl) ethane, stearic acid, chlorinated paraffin or a mixture thereof.

7. Anti-vibration device (100) according to one of the preceding claims, wherein the fire barrier layer (40) comprises at least one mechanical reinforcement agent, for example carbon black and/or antimony trioxide.

8. Anti-vibration device (100) according to one of the preceding claims, wherein the fire barrier layer (40) has a thickness of at least 0.5mm.

9. Anti-vibration device (100) according to one of the preceding claims, wherein the fire barrier layer (40) comprises at least one other elastomer, for example an elastomer for improving the implementation, the mechanical properties or the impermeability to gases of the polychloroprene.

10. Anti-vibration device (100) according to one of the preceding claims, wherein:
- the first armature (10) forms an inner armature;
- the second armature (20) forms an outer armature; and
- the structure (30) for damping vibrations is in the form of a laminate consisting of an elastomer layer (301) and a layer (302) of a non-elastomer material that is more rigid than the elastomer, for example metal, and comprising a first face (31) secured to the inner armature (10), a second face (32) secured to the outer armature (20), a third face (33) that extends between the inner armature (10) and the outer armature (20) and a fourth face (34), opposite the third face (33) and also extending between the inner armature (10) and the outer armature (20), said third and fourth faces (33, 34) therefore being faces that are not secured to the inner and outer armatures;
the fire barrier layer (40) further being located on at least one (34) of the faces (33, 34) that are not connected to the inner (10) and outer (20) armatures.
